Europäisches Patentamt

European Patent Office

Office européen des brevets

(11) Veröffentlichungsnummer : **0 325 156 B1**

# (12) EUROPÄISCHE PATENTSCHRIFT

(45) Veröffentlichungstag der Patentschrift :
**15.04.92 Patentblatt 92/16**

(21) Anmeldenummer : **89100414.5**

(22) Anmeldetag : **11.01.89**

(51) Int. Cl.⁵ : **B29B 13/10, B29B 17/00,
B02C 18/22, B02C 18/44**

(54) **Schneidmühle.**

(30) Priorität : **21.01.88 DE 3801665**

(43) Veröffentlichungstag der Anmeldung :
**26.07.89 Patentblatt 89/30**

(45) Bekanntmachung des Hinweises auf die
Patenterteilung :
**15.04.92 Patentblatt 92/16**

(84) Benannte Vertragsstaaten :
**DE FR IT SE**

(56) Entgegenhaltungen :
**FR-A- 2 494 599
FR-A- 2 534 180
US-A- 3 672 803**

(73) Patentinhaber : **Colortronic GmbH
Otto-Hahn-Str. 20
W-8382 Friedrichsdorf/Ts. (DE)**
Patentinhaber : **FIRMA FRANZ MÜLLER
Seegewann 2
W-6000 Frankfurt/M.-Rödelheim (DE)**

(72) Erfinder : **Müller, Gerhard
Alexanderstrasse 6
W-6000 Frankfurt/M.90 (DE)**

(74) Vertreter : **Schmidt, Horst, Dr.
Siegfriedstrasse 8
W-8000 München 40 (DE)**

**Beschreibung**

Die Erfindung betrifft eine Schneidmühle zum Zerkleinern von beim Spritzgießen von Kunststoffartikeln anfallenden Abfallprodukten mit einer die Abfallprodukte von einer Aufnahmestelle zu einer Zerkleinerungseinrichtung transportierenden Fördereinrichtung, welche in einem Zylindergehäuse um die Längsachse drehbar ist. Die Erfindung befaßt sich insbesondere mit dem Zerkleinern von Angußstücken unmittelbar im Anschluß an deren Abtrennung vom Spritzgußteil.

Bekannt sind Schneidmühlen, bei denen die Fördereinrichtung in Gestalt eines Förderbandes ausgebildet ist. Da Förderbänder keinen zwangsweisen Transport der zu fördernden Gegenstände bewerkstelligen können, kann leicht ein Stau mit einer entsprechenden Betriebsunterbrechung eintreten. Auf dem vorliegenden Gebiet werden daher vornehmlich Schneidmühlen verwendet, bei denen der Transport der Kunststoffabfallprodukte zum Mahlwerk mittels einer in einem Zylindergehäuse rotierenden Förderschnecke erfolgt (FR-A-25 34 180). Förderschnecken gewährleisten zwar die gewünschte Zwangsförderung der Abfallprodukte, doch wird dieser Vorteil mit einer hohen Unfallgefahr eingekauft, indem die Finger oder Hand einer Bedienungsperson leicht durch die Förderschnecke in das Zylindergehäuse der Schneidmühle eingezogen werden können, was ernste Verletzungen hervorrufen kann. Schneidmühlen mit einer Fördereinrichtung in Gestalt einer Förderschnecke dürfen daher aus Sicherheitsgründen nur in Verbindung mit zusätzlichen Sicherheitsvorkehrungen betrieben werden.

In Anbetracht dieser Umstände liegt der Erfindung die Aufgabe zugrunde, eine Schneidmühle der eingangs erwähnten Gattung zu schaffen, bei der bei gewährleisteter wirksamer Förderung der Abfallprodukte zur Zerkleinerungseinrichtung die Unfallgefahr im wesentlichen ausgeschaltet ist.

Diese Aufgabe wird erfindungsgemäß durch die Merkmale im kennzeichnenden Teil des Patentanspruches gelöst. Danach ist erfindungsgemäß anstelle einer Förderschnecke wenigstens eine im wesentlichen wendelförmig verlaufende Feder vorgesehen, die nur an einem antriebsseitigen Ende gegenüber dem umgebenden Zylindergehäuse lagefixiert ist. Das andere der Auslassöffnung des Gehäuses zugewandte axiale Ende der Feder steht in Abstand zu der benachbarten Gehäusewand, so daß zwischen dem besagten Ende der Feder und der Gehäusewand ein freier Raum im Zylindergehäuse verbleibt. Durch diese Maßnahmen wird sichergestellt, daß die Feder einwirkenden Belastungen elastisch nachgeben kann. Wenn die Hand oder die Finger einer Bedienungsperson in den Bereich der Feder gelangen sollten, besteht daher nicht die Gefahr, daß diese Körperteile zwischen Zylindergehäuse und Feder in einer verletzenden Weise eingequetscht werden können. Die bei Förderschnecken bestehende Unfallgefahr ist damit im wesentlichen ausgeschaltet, ohne daß hinsichtlich des Betriebsverhaltens Einbußen gegenüber Schneidmühlen mit Förderschnecke in Kauf genommen werden müssen. Insbesondere ist durch die Feder ein stetiger störungsfreier Transport selbst unterschiedlich großer Abfallprodukte gewährleistet, wobei die Feder noch den weiteren Vorteil bietet, daß kein Verklemmen der Abfallprodukte mit dem Zylindergehäuse zu befürchten ist. Dies bedeutet andererseits einen geringeren Energieverbrauch zum Antrieb der Feder. Zwar ist es auf dem Gebiet des Landmaschinenbaus bekannt (FR-A-24 94 599), zur Förderung von Futtermitteln zwischen einem Eingabetrichter und einer Häckselmaschine ein schraubenlinienförmig verlaufendes Element vorzusehen, das sich in einem biegsamen Schlauch drehen kann, doch wird im übrigen eine Anordnung beschrieben, die hinsichtlich Funktion und Ausbildung von der erfindungsgemäßen Schneidmühle verschieden ist.

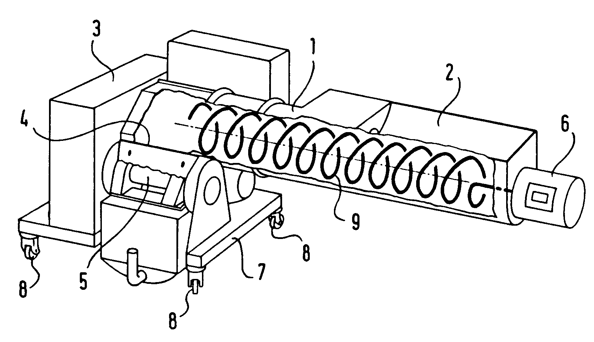

Die Erfindung wird nachfolgend anhand der Zeichnung näher erläutert. Die Zeichnung zeigt eine erfindungsgemäß aufgebaute Schneidmühle in perspektivischer schematischer Ansicht.

Wie dargestellt, umfasst die Schneidmühle ein im wesentlichen horizontal sich erstreckendes Zylindergehäuse 1, das an einem Ende an einem Rahmen 3 befestigt ist und im Bereich seines anderen Endes eine trichterförmige Einführöffnung 2 aufweist. Der Rahmen 3 stützt sich auf einer mit Rädern 8 versehenen Plattform 7 ab. Auf der Plattform 7 ist, wie dargestellt, eine Zerkleinerungseinrichtung oder ein Mahlwerk 5 befestigt, das unterhalb einer im Zylindergehäuse 1 vorgesehenen Auslaßöffnung 4 nahe dem rahmenseitigen Ende des Zylindergehäuses 1 angeordnet ist. Am anderen axialen Ende des Zylindergehäuses 1 ist ferner ein Antriebsmotor 6 mit Untersetzungsgetriebe befestigt, dessen (nicht näher bezeichnete) Abtriebswelle axial in das Zylindergehäuse 1 hineinragt.

Erfindungsgemäß ist im Zylindergehäuse 1 eine wendelförmig verlaufende Feder 9, insbesondere Schraubenfeder, aufgenommen, deren Durchmesser dem Innendurchmesser des Zylindergehäuses 1 angepaßt ist. Die Feder 9 ist an ihrem einen axialen Ende mit der Abtriebswelle des Antriebsmotors 6 verbunden, so daß sie bei eingeschaltetem Motor 6 in eine Drehbewegung um ihre Längsachse versetzt wird, um die über die Einführöffnung 2 in das Zylindergehäuse 1 hineingelangten Angußstücke zur Auslaßöffnung 4 bzw. zum Mahlwerk oder zur Zerkleinerungseinrichtung 5 zu transportieren. Das andere gegenüberliegende axiale Ende der Feder 9 ist dagegen frei beweglich relativ zum Zylindergehäuse 1. Wie dargestellt, endet die Feder 9 nahe bei oder im Bereich der Auslaßöffnung 4, so daß zwischen dem freien Ende der Feder 9 und der benachbarten Endwand

2

des Zylindergehäuses 1 ein Sammelraum für die zugelieferten Abfallprodukte verbleibt. Da beim Transport der Angußstücke von der Einführöffnung 2 zum Mahlwerk oder zur Zerkleinerungseinrichtung 5 nur geringe Belastungen auf die Feder einwirken (es findet kein Einklemmen von Angußstücken statt), kann die Elastizität der Feder im Hinblick auf eine Vermeidung der Unfallgefahr problemlos optimiert werden.

**Patentansprüche**

1. Schneidmühle zum Zerkleinern von beim Spritzgießen von Kunststoffartikeln anfallenden Abfallprodukten mit einer die Abfallprodukte von einer Aufnahmestelle (2) zu einer Zerkleinerungseinrichtung (5) transportierenden Fördereinrichtung, welche in einem Zylindergehäuse (1) um die Längsachse drehbar ist, dadurch gekennzeichnet, daß die Fördereinrichtung wenigstens eine im wesentlichen wendelförmig verlaufende Feder (9) umfaßt, die nur am antriebsseitigen axialen Ende lagefixiert ist, während das gegenüberliegende der Zerkleinerungseinrichtung (5) zugewandte axiale Ende der Feder (9) in Abstand von einer benachbarten Endwand des Zylindergehäuses (1) angeordnet ist, so daß die Feder (9) im Zylindergehäuse (1) in axialer und radialer Richtung frei beweglich ist.

**Claims**

1. A cutting mill for crushing waste products resulting during injection molding of plastic articles comprising conveying means for conveying the waste products from a receiving section (2) to a crushing means (5), said conveying means being rotatable around a longitudinal axis in a cylindrical housing (1), characterized in that said conveying means comprises at least one spring (9) extending in a substantially helical manner and being fixed only at an axial end thereof adjacent the drive side while the opposite axial end of the spring facing said crushing means (5) is disposed at a distance from an adjacent end wall of said cylindrical housing (1) whereby the spring (9) is freely movable in the cylindrical housing (1) in an axial and radial direction.

**Revendications**

1. Broyeur à découper pour fragmenter les déchets résultant de la coulée sous pression des articles en matière plastique, avec un dispositif de transport transportant les déchets depuis un poste de collecte (2) vers un dispositif de fragmentation (5), ledit dispositif de transport étant placé dans un boîtier cylindrique (1) et pouvant tourner autour de l'axe longitudinal, caractérisé en ce que le dispositif de transport comprend au moins un ressort (9) de forme essentiellement hélicoïdale, qui est fixé en position uniquement à son extrémité axiale du côté de l'entraînement tandis que l'extrémité axiale tournée vers le dispositif de fragmentation (5) du ressort (9) est disposée à une certaine distance d'une paroi terminale voisine du boîtier cylindrique (1), si bien que le ressort (9) peut se déplacer librement dans le boîtier cylindrique (1) en directions axiale et radiale.